# EUROPÄISCHE PATENTSCHRIFT

(11) **EP 4 422 941 B1**
(45) Veröffentlichungstag und Bekanntmachung des Hinweises auf die Patenterteilung: **25.06.2025**
(21) Anmeldenummer: 22777622.6
(22) Anmeldetag: 19.09.2022
(51) Int. Cl.: B60W 30/17, B60W 30/18, B60W 30/16

(54) **VERFAHREN ZUR AUTOMATISCHEN REGELUNG EINER LÄNGSBEWEGUNG EINES FAHRZEUGES**
METHOD FOR AUTOMATICALLY CONTROLLING A LONGITUDINAL MOVEMENT OF A VEHICLE
PROCÉDÉ DE COMMANDE AUTOMATIQUE D'UN MOUVEMENT LONGITUDINAL D'UN VÉHICULE

(30) Priorität: 26.10.2021 DE 102021005311
(43) Veröffentlichungstag der Anmeldung: 04.09.2024
(73) Patentinhaber: Mercedes-Benz Group AG, 70372 Stuttgart (DE)
(72) Erfinder: KAEFER, Eugen, 71272 Renningen (DE); LINDNER, Frank, 89075 Ulm (DE)
(74) Vertreter: Novagraaf Group
(86) Internationale Anmeldenummer: PCT/EP2022/075947
(87) Internationale Veröffentlichungsnummer: WO 2023/072478

(56) Entgegenhaltungen:
- EP-A1- 3 599 141
- EP-A1- 3 693 244
- EP-A1- 4 059 795
- WO-A1-2021/094802
- JP-A- 2009 001 245
- US-A1- 2019 344 801
- US-A1- 2021 327 276

## Beschreibung

Die Erfindung betrifft ein Verfahren zur automatischen Regelung einer Längsbewegung eines Fahrzeuges, wobei anhand erfasster Signale einer Umgebungssensorik eine Umgebung des Fahrzeuges und sich in dieser befindende Objekte detektiert werden und ein Zustand einer Lichtsignalanlage an einer lichtsignalgeregelten Kreuzung zum Passieren der Kreuzung von dem Fahrzeug zu berücksichtigende Lichtsignalanlage ermittelt wird.

Aus der WO 2012/166170 A1 ist ein Verfahren zum Steuern eines Fahrzeuges in einem autonomen Betriebsmodus bekannt. Das Verfahren umfasst die Schritte:
- Steuern eines Betriebes des Fahrzeuges durch einen Prozessor basierend auf einer ersten Steuerstrategie,
- Identifizieren eines Sensorfeldes basierend auf einem Sichtfeld eines oder mehrerer Sensoren des Fahrzeuges,
- Empfangen von Sensordaten von ausgewählten des einen oder der mehreren Sensoren,
- Identifizieren einer Änderung der Sensorwahrnehmung des einen oder der mehreren Sensoren basierend auf den Sensordaten, wobei die Änderung der Sensorwahrnehmung eine verminderte Fähigkeit umfasst, Objekte innerhalb des Sensorfeldes zu erkennen,
- Bestimmen einer zweiten Steuerstrategie basierend auf der Änderung und
- Steuern des Betriebes des Fahrzeuges durch den Prozessor basierend auf der zweiten Steuerstrategie.

Aus der EP 3 693 244 A1 geht ein Verfahren hervor, bei dem bei einem nicht erkannten Rotlichtsignal ein Fahrzeug an einer Position möglichst nahe zur Ampel zum Halten gebracht wird, an dem das Rotlichtsignal noch ohne Verdeckung gesehen werden kann.

Die US 2019/344 801 A1 offenbart ein Verfahren, bei dem ein Abstand zu einem Vorderfahrzeug derart erhöht wird, so dass ein Fahrer einen verdeckungsfreien Blick auf eine Ampelanlage erhält.

Aus der US 2021/327 276 A1 ein Verfahren hervor, bei dem ein Abstand zu einem Vorderfahrzeug derart vergrößert wird, dass eine unverdeckte Sicht auf Schilder möglich ist.

Die EP 3 599 141 A1 beschreibt ein Verfahren zur Ermittlung von Sensorschatten und eine Prognose einer Sichtbarkeit verschiedener Bereiche. Ein Fahrzeug wird dabei so gesteuert, dass es diese Bereiche noch mit den Sensoren erfassen kann. Beim Anhalten des Fahrzeugs vor einer Ampel wird eine Halteposition so gewählt, dass die Ampel im Sichtbereich der Sensoren verbleibt.

Die JP 2009-1245 A offenbart ein Verfahren, bei dem ein Fahrzeug hinter einem weiteren Fahrzeug derart positioniert wird, dass eine Sicht auf eine vor dem weiteren Fahrzeug angeordnete Ampel einsehbar ist.

Aus der EP 4 059 795 A1 geht ein Verfahren hervor, bei dem ein Sichtfeld der Kamera und Bereiche ermittelt werden, in denen eine Ampel für eine Sensorik eines Fahrzeugs sichtbar ist. Um die Sicht auf die Ampel zu ermöglichen, wird das Fahrzeug in die ermittelten Bereiche gesteuert.

Der Erfindung liegt die Aufgabe zugrunde, ein Verfahren zur automatischen Regelung einer Längsbewegung eines Fahrzeuges anzugeben.

Die Aufgabe wird erfindungsgemäß durch ein Verfahren gelöst, welches die in Anspruch 1 angegebenen Merkmale aufweist.

Vorteilhafte Ausgestaltungen der Erfindung sind Gegenstand der Unteransprüche.

Ein Verfahren zur automatischen Regelung einer Längsbewegung eines Fahrzeuges sieht vor, dass anhand erfasster Signale einer Umgebungssensorik eine Umgebung des Fahrzeuges und sich in dieser befindende Objekte detektiert werden und ein Zustand einer Lichtsignalanlage an einer lichtsignalgeregelten Kreuzung zum Passieren der Kreuzung von dem Fahrzeug zu berücksichtigende Lichtsignalanlage ermittelt wird. Erfindungsgemäß wird bei einer Annäherung des Fahrzeuges an die Kreuzung erkannt, dass durch ein vorderes Fahrzeug eine Sicht der Umgebungssensorik auf die Lichtsignalanlage verdeckt sein kann und wenn erkannt wird, dass die Sicht der Umgebungssensorik auf die Lichtsignalanlage durch das vordere Fahrzeug verdeckt sein kann, dann wird in Abhängigkeit einer momentanen Position des Fahrzeuges relativ zu der Lichtsignalanlage und relativ zu dem vorderen Fahrzeug ein Mindestabstand des Fahrzeuges zu dem vorderen Fahrzeug ermittelt, welcher der automatischen Regelung der Längsbewegung zugrunde gelegt und von dem Fahrzeug nicht unterschritten wird.

Durch Anwendung des Verfahrens kann weitestgehend ausgeschlossen werden, dass die Sicht der Umgebungssensorik des Fahrzeuges, welches insbesondere im automatisierten Fahrbetrieb fährt, durch ein vorderes Fahrzeug, beispielsweise einen Lastkraftwagen, auf eine Lichtsignalanlage verdeckt wird.

Insbesondere bietet das Verfahren einen optimierten Umgang mit einem besonders hohen und/oder breiten vorderen Fahrzeug in einem Kreuzungsbereich, welches einen Sensorschatten wirft und die Sicht auf die Lichtsignalanlage verdeckt. In einem solchen Fall wird der Mindestabstand des Fahrzeuges zu dem vorausfahrenden Fahrzeug derart angepasst, dass eine verhältnismäßig plötzlich aus dem Sensorschatten erscheinende Lichtsignalanlage keine Überraschung für das Fahrzeug darstellt und dieses abrupt bremsen muss. Somit stellt die aus dem Sensorschatten plötzlich erscheinende Lichtsignalanlage durch Anwendung des Verfahrens ein kalkuliertes Risiko dar.

In einer Ausführung des Verfahrens wird der Mindestabstand derart bestimmt, dass die Umgebungssensorik bei Erreichen des Mindestabstandes zwischen dem Fahrzeug und dem vorderen Fahrzeug eine freie, durch das vordere Fahrzeug unverdeckte Sicht auf die Lichtsignalanlage hat. Das Fahrzeug fährt also mit dem Mindestabstand zu dem Fahrzeug oder hält unter Einhaltung des Mindestabstandes so hinter dem Fahrzeug, dass die Umgebungssensorik freie Sicht auf die Lichtsignalanlage hat und entsprechend auf einen Zustand auf diese reagieren kann.

Erfindungsgemäß wird ein Sensorschatten, den das vordere Fahrzeug für die Umgebungssensorik des Fahrzeuges wirft, ermittelt, um anhand des Sensorschattens zu ermitteln, ob eine freie Sicht der Sensorik auf die Lichtsignalanlage besteht. Dabei ist unter Sensorschatten die Sichtverdeckung für die Umgebungssensorik zu verstehen.

Erfindungsgemäß ist weiterhin vorgesehen, dass in dem Sensorschatten eine nächstmögliche Position einer Lichtsignalanlage als Hypothese, insbesondere als ungünstigsten Fall, bestimmt wird. Dabei wird die nächstmögliche Position einer Lichtsignalanlage zur Ermittlung des Mindestabstandes angenommen, dass das Fahrzeug vergleichsweise komfortabel auf die Lichtsignalanlage, sofern sich dort tatsächlich eine befindet, reagieren kann.

Erfindungsgemäß wird als Zustand der Lichtsignalanlage an der nächstmöglichen Position, insbesondere als ungünstigster Fall für das Fahrzeug, Rot angenommen. Durch diese Annahme kann realisiert werden, dass das Fahrzeug mit einem komfortablen Anhaltemanöver an der Lichtsignalanlage zum Stehen kommen kann.

Hierzu ist erfindungsgemäß vorgesehen, dass das Fahrzeug in Abhängigkeit von seiner momentanen Fahrgeschwindigkeit einen komfortablen Anhalteweg entsprechend der Hypothese ermittelt und dass dieser in Weiterbildung des Verfahrens als Mindestabstand zu der nächstmöglichen Position der Lichtsignalanlage vorgegeben wird, zusätzlich zu dem Mindestabstand zu dem vorderen Fahrzeug. Insbesondere wird der Anhalteweg entsprechend der Hypothese ermittelt, dass weitestgehend ausgeschlossen werden kann, dass das Fahrzeug plötzlich auf eine Rot anzeigende Lichtsignalanlage reagieren muss und ein abruptes Bremsmanöver eingeleitet wird, wodurch Insassen des Fahrzeuges verunsichert sein können.

Wenn in einer möglichen Ausführung des Verfahrens eine Position einer für das Fahrzeug relevanten Lichtsignalanlage, beispielsweise anhand vorliegender Kartendaten, bekannt ist, wird ein Mindestabstand auf diese bekannte Position der Lichtsignalanlage beschränkt. D. h., dass in einem solchen Fall keine weitere Ermittlung erfolgt, sondern die Regelung der Längsbewegung auf diesen Mindestabstand in Bezug auf die bekannte Position der Lichtsignalanlage erfolgt.

Ausführungsbeispiele der Erfindung werden im Folgenden anhand von Zeichnungen näher erläutert.

Dabei zeigen:
- Fig. 1: schematisch eine Verkehrssituation mit einem Fahrzeug und einem eine Lichtsignalanlage verdeckenden vorderen Fahrzeug,
- Fig. 2: schematisch eine weitere Verkehrssituation mit dem Fahrzeug, welches einen ermittelten Mindestabstand zu dem vorderen Fahrzeug aufweist und
- Fig. 3: schematisch eine Übersicht zur Ermittlung des Mindestabstandes.

Einander entsprechende Teile sind in allen Figuren mit den gleichen Bezugszeichen versehen.

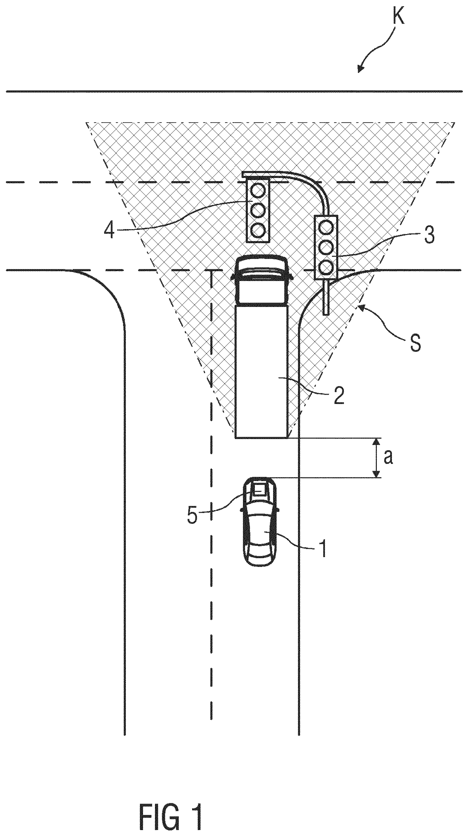

Figur 1 zeigt eine Verkehrssituation an einer Kreuzung K mit einem Fahrzeug 1 und einem vor diesem fahrenden vorderen Fahrzeug 2, welches als Lastkraftwagen 2 ausgeführt ist.

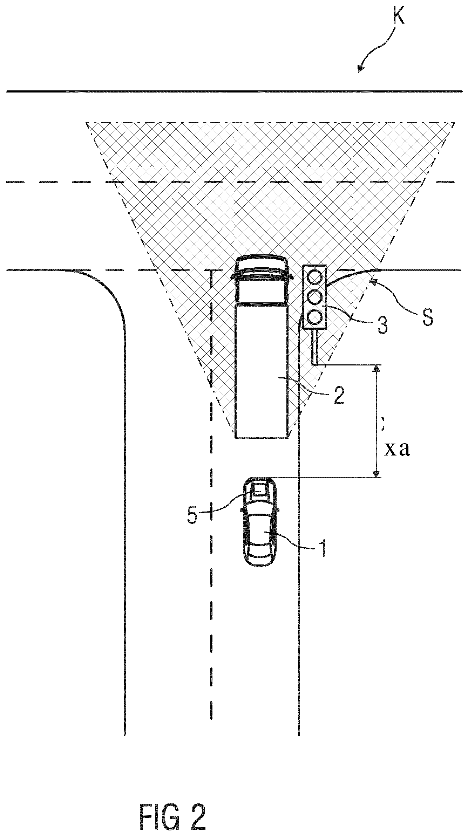

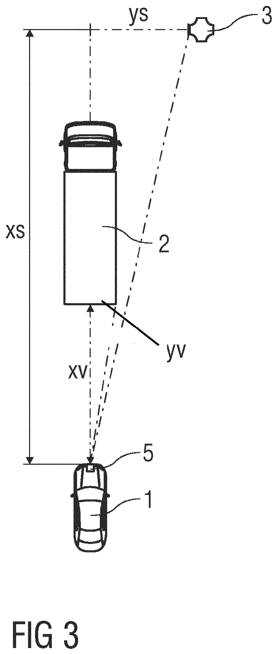

In Figur 2 ist eine weitere Verkehrssituation gezeigt, bei welcher das Fahrzeug 1 einen ermittelten Mindestabstand xa zu der Lichtzeichenanlage aufweist und in Figur 3 ist eine Übersicht zur Ermittlung des Mindestabstandes xv dargestellt.

Die Kreuzung K ist lichtsignalgeregelt, wobei eine Lichtsignalanlage 3 am Fahrbahnrand steht und eine gleichgeschalte weitere Lichtsignalanlage 4 an einem sogenannten Peitschenmast hängt.

Das Fahrzeug 1 fährt im automatisierten Fahrbetrieb, wobei anhand erfasster Signale einer beispielhaft und stark vereinfacht gezeigten Umgebungssensorik 5 eine Umgebung des Fahrzeuges 1, insbesondere eine vorausliegende Umgebung, und sich in dieser befindende Objekte detektiert werden.

Auch wird anhand der erfassten Signale der Umgebungssensorik 5 ein Zustand der beim Passieren der Kreuzung K zu beachtenden Lichtsignalanlagen 3, 4 erkannt.

Gemäß dem in den Figuren 1 bis 3 gezeigten Ausführungsbeispiel fährt das Fahrzeug 1 hinter dem vergleichsweise großen Fahrzeug 2, welches auch ein Bus sein kann, auf die lichtsignalgeregelte Kreuzung K zu.

Fährt das Fahrzeug 1, wie in Figur 1 gezeigt ist, mit einem zu geringen Abstand a dem vorderen Fahrzeug 2 hinterher, wird der Umgebungssensorik 5 durch das vordere Fahrzeug 2 eine Sicht auf die Lichtsignalanlagen 3, 4 verwehrt. Dabei kann die Sicht durch das vordere Fahrzeug 2 sowohl auf die Lichtsignalanlage 3 am Fahrbahnrand als auch auf die obere weitere Lichtsignalanlage 4 verdeckt sein, wobei eine Sichtverdeckung S, die auch als Sensorschatten S bezeichnet wird, mittels einer schraffierten Fläche in den Figuren 1 und 2 gezeigt ist.

Folge hiervon kann sein, dass das Fahrzeug 1 mit vergleichsweise hoher Fahrgeschwindigkeit auf die Lichtsignalanlagen 3, 4 zufährt, welche Rot anzeigen und das vordere Fahrzeug 2 die Kreuzung K noch passieren konnte. Somit ist das, insbesondere im automatisierten Fahrbetrieb, fahrende Fahrzeug 1 gezwungen, eine dynamische Bremsung, d. h. ein vergleichsweise starkes Bremsmanöver einzuleiten, um das Fahrzeug 1 an der Rot zeigenden Lichtsignalanlage 3, 4 zum Stehen zu bringen, wodurch Insassen des Fahrzeuges 1 erschrecken und/oder sich verletzen können.

Auch kann es sein, dass ein Winkel zwischen der Umgebungssensorik 5 und, insbesondere der weiteren Lichtsignalanlage 4 zu groß ist, wenn diese aus der Sichtverdeckung S des vorderen Fahrzeuges 2 erscheint, so dass sich die weitere Lichtsignalanlage 4 außerhalb eines Erfassungsbereiches der Umgebungssensorik 5 befindet.

Um dem Fahrzeug 1 in einer solchen Situation einen verhältnismäßig komfortablen automatisierten Fahrbetrieb weitestgehend zu ermöglichen, ist im Folgenden ein Verfahren zur Regelung einer Längsbewegung des Fahrzeuges 1 beschrieben.

Das Verfahren sieht vor, dass wenn sich das Fahrzeug 1 einer lichtsignalgeregelten Kreuzung K nähert und ein Zustand der Lichtsignalanlage 3, 4 beim Passieren der Kreuzung K von dem Fahrzeug 1 zu berücksichtigen ist, wird bei einer Annäherung des Fahrzeuges 1 an die Kreuzung K erkannt, ob das jeweils vordere Fahrzeug 2 die Sicht der Umgebungssensorik 5 auf die Lichtsignalanlage 3, 4 verdeckt.

Wenn ermittelt wird, dass die Sicht der Umgebungssensorik 5 auf die Lichtsignalanlage 3, 4 durch das vordere Fahrzeug 2 verdeckt wird, wird in Abhängigkeit einer momentanen Position des Fahrzeuges 1 relativ zu der Lichtsignalanlage 3, 4 und relativ zu dem vorderen Fahrzeug 2 ein Mindestabstand xv des Fahrzeuges 1 zu dem vorderen Fahrzeug 2 ermittelt, wie in Figur 3 näher gezeigt ist.

Um zu ermöglichen, dass sich die Lichtsignalanlage 3 im Erfassungsbereich der Umgebungssensorik 5 befindet, so dass ein Zustand der Lichtsignalanlage 3 erfasst werden kann, ist es erforderlich, dass ein Verhältnis von einer ersten Strecke ys zu einer zweiten Strecke xs größer ist als ein Verhältnis von einer dritten Strecke yv zu einer vierten Strecke xv.

Dabei stellt die erste Strecke ys einen Abstand zwischen einer Mittellinie des vorderen Fahrzeuges 2 zu einer inneren Ecke der Lichtsignalanlage 3 dar, wohingegen die zweite Strecke xs einen Geradeausabstand zwischen der Umgebungssensorik 5 des Fahrzeuges 1 und einer Verlängerung der ersten Strecke ys abbildet.

Die dritte Strecke yv erstreckt sich von der Umgebungssensorik 5 bis zu einer äußeren Ecke des vorderen Fahrzeuges 2 und die vierte Strecke xv stellt den Mindestabstand xv zwischen dem Fahrzeug 1 und dem vorderen Fahrzeug 2 dar.

Dieser Ansatz ist analog für die oben angeordnete weitere Lichtsignalanlage 4 und auch für eine nicht gezeigte linksseitig angeordnete Lichtsignalanlage anwendbar. Für eine an einem Peitschenmast angeordnete weitere Lichtsignalanlage 4 ist eine Mindesthöhe der weiteren Lichtsignalanlage 4 relevant, weil diese im ungünstigsten Fall vergleichsweise tief hängende weitere Lichtsignalanlage 4, beispielsweise von einem Sattelauflieger, verdeckt wird.

Die relative Position der Lichtsignalanlage 3 kann durch eine hochauflösende Karte oder eine vorherige Sichtung der Lichtsignalanlage 3 abgeleitet werden. Zudem wird die relative Position und Fahrgeschwindigkeit des vorderen Fahrzeuges 2 von Assistenzsystemen über erfasste radar-, lidar und/oder kamerabasierte Signale berechnet. Der einzuhaltende Mindestabstand xv ist also größer/gleich yv * xs/ys, wobei das Fahrzeug 1 entsprechend beschleunigt oder verzögert wird.

Eine solche hochauflösende Karte beinhaltet die Position einer Lichtsignalanlage 3, 4 hochgenau, ebenso wie das Fahrzeug 1 verortet wird. Daraus lassen sich Sichtstrahlen der Umgebungssensorik 5 errechnen, mittels derer die relevante Lichtsignalanlage 3, 4 zu sehen sein müsste. Treffen diese errechneten Sichtstrahlen auf das vordere Fahrzeug 2 bzw. schneiden diese Sichtstrahlen das vordere Fahrzeug 2 oder dessen Prädiktion unter einer Annahme einer gleichartigen Bewegung des vorderen Fahrzeuges 2, insbesondere in Bezug auf Fahrgeschwindigkeit und Beschleunigung, so kann das Fahrzeug 1 entsprechend reagieren, so dass der Sichtstrahl die entsprechende Lichtsignalanlage 3, 4 erfasst.

In Bezug auf das vordere Fahrzeug 2 wird die Sichtverdeckung S, also der Sensorschatten S, den das vordere Fahrzeug 2 für die Umgebungssensorik 5 des Fahrzeuges 1 wirft, von diesem ermittelt, insbesondere berechnet.

In dem Sensorschatten S wird dann eine nächstmögliche Position einer potentiellen Lichtsignalanlage 3 ermittelt, die als ungünstigster Fall-Annahme herangezogen wird, da dem Fahrzeug 1, d. h. einem fahrzeugseitigen System, kein Beweis vorliegt, dass sich dort keine Lichtsignalanlage 3 befindet.

Zudem wird ein Zustand der Lichtsignalanlage 3 als Rot angenommen, da dieser Umstand ebenfalls einen ungünstigsten Fall für das Fahrzeug 1 darstellt. Die Umgebungssensorik 5 des Fahrzeuges 1 ist daraufhin in der Lage, diese hypothetisch nächstliegende Lichtsignalanlage 3 zu erkennen, wenn diese nicht mehr von dem vorderen Fahrzeug 2 verdeckt wird und sich somit nicht mehr im Sensorschatten S befindet. Zeigt die Lichtsignalanlage 3 dann Rot als Zustand, kann das Fahrzeug 1 mit einem vergleichsweise komfortablen Anhaltemanöver vor der Lichtsignalanlage 3 zum Stehen kommen. Damit dies möglich ist, muss das Fahrzeug 1 in Abhängigkeit von seiner Fahrgeschwindigkeit einen Anhalteweg bis zu der Lichtsignalanlage 3 kennen und diesen zusätzlich als Mindestabstand xa in Bezug auf die Regelung der Längsbewegung einregeln. Somit kann weitestgehend vermieden werden, dass das Fahrzeug 1 zu nah an das vordere Fahrzeug 2 auffährt und von einer plötzlich dastehenden und Rot anzeigenden Lichtsignalanlage 3 überrascht wird.

Ist die Position der für das Fahrzeug 1 relevanten Lichtsignalanlage 3, 4, beispielsweise anhand fahrzeugseitig vorliegender Kartendaten bekannt, kann ein Hypothesenraum auf diese Position der Lichtsignalanlage 3, 4 aus den Kartendaten beschränkt werden. Darüber hinaus kann eine Erkennung einer querenden Straße als Indiz für eine Kreuzung K den Hypothesenraum ebenfalls einschränken.

Eine Navigationskarte mit einer Eintragung der Kreuzung K mit Lichtsignalanlagen 3, 4 ohne eine genaue Angabe der Positionen der einzelnen Lichtsignalanlagen 3, 4, ermöglicht es dem Fahrzeug 1 rechtzeitig vor Erreichen der Kreuzung K einen angemessenen Mindestabstand xv zu dem gegebenenfalls die Sicht der Umgebungssensorik 5 zumindest teilweise verdeckenden vorderen Fahrzeug 2 einzuhalten, um somit die Möglichkeit einer freien Sicht der Umgebungssensorik 5 zumindest auf die Lichtsignalanlage 3 zu haben.

Ohne vorliegende Karteninformationen kann das Verfahren ebenfalls genutzt werden.

Sollte in größerer Entfernung des Fahrzeuges 1 zu einer Lichtsignalanlage 3, 4 die Sicht auf diese unverdeckt sein, aber durch Annäherung an das vordere Fahrzeug 2 schwinden, so kann eine zuvor geschätzte Position des Fahrzeuges 1 genutzt werden, um wie bei Vorliegen hochgenauer Kartendaten die Sichtstrahlen zu berechnen.

## Patentansprüche

1. Verfahren zur automatischen Regelung einer Längsbewegung eines Fahrzeuges (1), wobei anhand erfasster Signale einer Umgebungssensorik (5) eine Umgebung des Fahrzeuges (1) und sich in dieser befindende Objekte detektiert werden und ein Zustand einer Lichtsignalanlage (3, 4) an einer lichtsignalgeregelten Kreuzung (K) zum Passieren der Kreuzung (K) von dem Fahrzeug (1) zu berücksichtigende Lichtsignalanlage (3, 4) ermittelt werden kann,
**dadurch gekennzeichnet, dass**
- bei einer Annäherung des Fahrzeuges (1) an die Kreuzung (K) erkannt wird, dass durch ein vorderes Fahrzeug (2) eine Sicht der Umgebungssensorik (5) auf die Lichtsignalanlage (3, 4) verdeckt sein kann, und
dann, wenn erkannt wird, dass die Sicht der Umgebungssensorik (5) auf die Lichtsignalanlage (3, 4) durch das vordere Fahrzeug (2) verdeckt sein kann, in Abhängigkeit einer momentanen Position des Fahrzeuges (1) relativ zu der Lichtsignalanlage (3, 4) und relativ zu dem vorderen Fahrzeug (2) ein Mindestabstand (xv) des Fahrzeuges (1) zu dem vorderen Fahrzeug (2) ermittelt wird, welcher der automatischen Regelung der Längsbewegung zugrunde gelegt und von dem Fahrzeug (1) nicht unterschritten wird,
**dadurch gekennzeichnet, dass**
ein Sensorschatten (S), den das vordere Fahrzeug (2) für die Umgebungssensorik (5) des Fahrzeuges (1) wirft, ermittelt wird, wobei weiter in dem ermittelten Sensorschatten (S) eine nächstmögliche Position einer Lichtsignalanlage (3) als Hypothese bestimmt wird und wobei als Zustand der Lichtsignalanlage (3) an der nächstmöglichen Position Rot angenommen wird, wobei das Fahrzeug (1) in Abhängigkeit von seiner momentanen Fahrgeschwindigkeit einen komfortablen Anhalteweg entsprechend der Hypothese ermittelt und dieser als Mindestabstand (xa) zur hypothetischen nächstliegenden Lichtsignalanlage (3) in Bezug auf die Längsbewegung vorgegeben wird, zusätzlich zu dem Mindestabstand (xv) zu dem vorderen Fahrzeug (2).

2. Verfahren nach Anspruch 1,
**dadurch gekennzeichnet, dass** der Mindestabstand (xv) derart bestimmt wird, dass die Umgebungssensorik (5) bei Erreichen des Mindestabstandes (xv) zwischen dem Fahrzeug (1) und dem vorderen Fahrzeug (2) eine freie, durch das vordere Fahrzeug (2) unverdeckte Sicht auf die Lichtsignalanlage (3, 4) hat.

3. Verfahren nach einem der vorhergehenden Ansprüche,
**dadurch gekennzeichnet, dass** wenn eine Position einer für das Fahrzeug (1) relevanten Lichtsignalanlage (3) bekannt ist, der Mindestabstand (xa) zur Lichtsignalanlage auf diese bekannte Position der Lichtsignalanlage (3) beschränkt wird.

## Claims

1. Method for automatically controlling a longitudinal movement of a vehicle (1), an environment of the vehicle (1) and objects located in said environment being detected on the basis of recorded signals from an environmental sensor system (5), and a state of a traffic light system (3, 4) at a traffic light-controlled intersection (K) being able to be determined in order for the vehicle to pass the intersection (K) of the traffic light system (3, 4) to be taken into account by the vehicle (1), **characterized in that**
- when the vehicle (1) approaches the intersection (K), it is identified that a view of the environmental sensor system (5) to the traffic light system (3, 4) may be obscured by a vehicle in front (2), and
when it is identified that the view of the environmental sensor system (5) to the traffic light system (3, 4) may be obscured by the vehicle in front (2), a minimum distance (xv) of the vehicle (1) to the vehicle in front (2) is determined depending on a current position of the vehicle (1) relative to the traffic light system (3, 4) and relative to the vehicle in front (2), which minimum distance is used as the basis for the automatic control of the longitudinal movement and is not undercut by the vehicle (1),
**characterized in that**
a sensor shadow (S) cast by the vehicle in front (2) for the environmental sensor system (5) of the vehicle (1) is determined, a nearest possible position of a traffic light system (3) being further ascertained as a hypothesis in the determined sensor shadow (S), and red being assumed as the state of the traffic light system (3) at the nearest possible position, the vehicle (1) determining a comfortable stopping distance according to the hypothesis depending on its current driving speed, and this being specified as a minimum distance (xa) to the hypothetical nearest traffic light system (3) in relation to the longitudinal movement, in addition to the minimum distance (xv) to the vehicle in front (2).

2. Method according to claim 1,
**characterized in that** the minimum distance (xv) is ascertained in such a way that the environmental sensor system (5) has a clear view of the traffic light system (3, 4) unobstructed by the vehicle in front (2) when the minimum distance (xv) between the vehicle (1) and the vehicle in front (2) is reached.

3. Method according to either of the preceding claims,
**characterized in that** if a position of a traffic light system (3) relevant to the vehicle (1) is known, the minimum distance (xa) to the traffic light system is limited to this known position of the traffic light system (3).

## Revendications

1. Procédé de régulation automatique d'un mouvement longitudinal d'un véhicule (1), dans lequel, à l'aide de signaux acquis d'un système de capteurs d'environnement (5), un environnement du véhicule (1) et des objets se trouvant dans celui-ci sont détectés et un état d'une installation de feux de circulation (3, 4) peut être déterminé au niveau d'une installation de feux de circulation (3, 4) à prendre en compte à un carrefour (K) régulé par des feux de circulation par le véhicule (1) pour le passage du carrefour (K), **caractérisé en ce que**
- lors de l'approche du véhicule (1) vers le carrefour (K), on reconnaît qu'une vue du système de capteurs d'environnement (5) sur l'installation de feux de circulation (3, 4) peut être masquée par un véhicule (2) situé devant, et
lorsqu'il est reconnu que la vue du système de capteurs d'environnement (5) sur l'installation de feux de circulation (3, 4) peut être masquée par le véhicule (2) situé devant, une distance minimale (xv) du véhicule (1) par rapport au véhicule (2) situé devant est déterminée en fonction d'une position momentanée du véhicule (1) par rapport à l'installation de feux de circulation (3, 4) et par rapport au véhicule (2) situé devant, distance qui sert de base à la régulation automatique du mouvement longitudinal et en dessous de laquelle le véhicule (1) ne descend pas,
**caractérisé en ce que**
une ombre de capteur (S), que le véhicule (2) situé devant projette pour le système de capteurs d'environnement (5) du véhicule (1), est déterminée, dans lequel une position la plus proche possible d'une installation de feux de circulation (3) est en outre définie comme hypothèse dans l'ombre de capteur (S) déterminée et dans lequel l'état de l'installation de feux de circulation (3) à la position la plus proche possible est supposé rouge, dans lequel le véhicule (1) détermine, en fonction de sa vitesse de déplacement momentanée, une distance d'arrêt confortable correspondant à l'hypothèse et celle-ci est prédéfinie comme distance minimale (xa) par rapport à l'installation de feux de circulation (3) hypothétiquement la plus proche par rapport au mouvement longitudinal, en plus de la distance minimale (xv) par rapport au véhicule (2) situé devant.

2. Procédé selon la revendication 1,
**caractérisé en ce que** la distance minimale (xv) est définie de telle sorte que, lorsque la distance minimale (xv) entre le véhicule (1) et le véhicule (2) situé devant est atteinte, le système de capteurs d'environnement (5) a une vue libre, non masquée par le véhicule (2) situé devant, sur l'installation de feux de circulation (3, 4).

3. Procédé selon l'une des revendications précédentes,
**caractérisé en ce que,** si une position d'une installation de feux de circulation (3) pertinente pour le véhicule (1) est connue, la distance minimale (xa) par rapport à l'installation de feux de circulation est limitée à cette position connue de l'installation de feux de circulation (3).
